# EUROPEAN PATENT SPECIFICATION

(11) **EP 2 362 245 B1**
(45) Date of publication and mention of the grant of the patent: **14.05.2014**
(21) Application number: 10154746.1
(22) Date of filing: 25.02.2010
(51) Int. Cl.: G02B 3/00

(54) **Symetrical lens array with improved depth of field, enhanced uniformity, and brightness**
Symmetrische Linsenanordnung mit verbesserter Feldtiefe, verbesserter Gleichmäßigkeit und Helligkeit
Réseau de lentille symétrique avec profondeur de champ améliorée, uniformité améliorée et luminosité

(43) Date of publication of application: 31.08.2011
(73) Proprietor: Pixon Technologies Corp., Hsien-Tien City, Taipei Hsien (TW)
(72) Inventor: Wu, Rong-Yaw, Hsin-Tien City, Taipei Hsien (TW); Chen, Shih Che, Hsin-Tien City, Taipei Hsien (TW); Chen, Ching Yi, Hsin-Tien City, Taipei Hsien (TW)
(74) Representative: Lang, Christian

(56) References cited:
- JP-A- 9 307 697
- JP-A- 56 142 510
- JP-A- 2009 092 876
- US-A- 4 961 802
- US-A1- 2001 028 506

## Description

### BACKGROUND OF THE INVENTION

### Field of the Invention

The present invention relates to optics. More specifically, the present invention discloses an array of lenses for high-resolution imaging of a surface.

### Description of the Prior Art

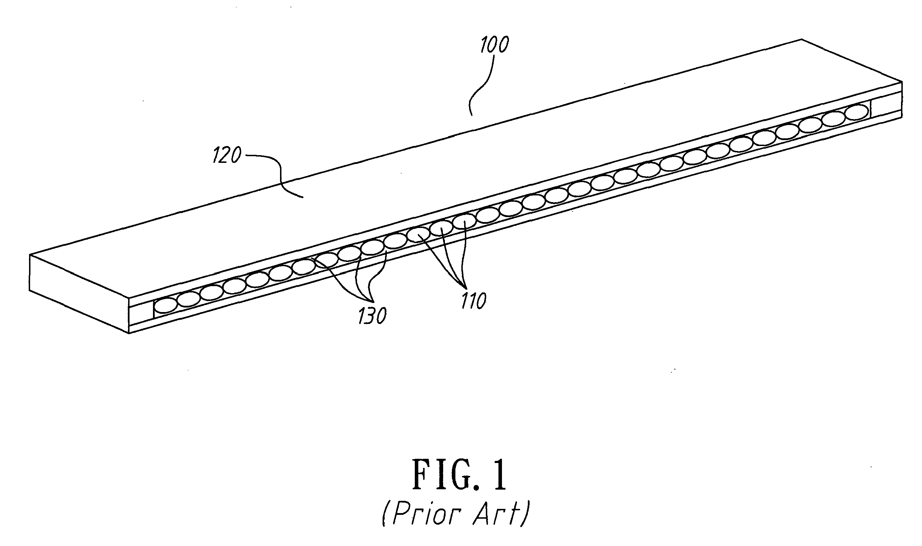

Traditionally, the lens for a one to one imaging optical scanner is a rod lens array. Please refer to Fig.1, a perspective drawing of a prior-art rod lens array 100. The rod lens array 100 is constructed from a plurality of fiber optic rod lenses 110. Each individual fiber optic rod lens 110 is cut from a fiber optic glass strand, and its ends must be polished. The plurality of fiber optic rod lenses 110 are then arranged side by side, in a row or multiple rows with their optical axes in parallel, in a frame 120 and held in place by an adhesive layer 130. The fiber optic rod lenses 110 are typically made from GRIN (graduated index) fibers, with the refractive index of the glass carefully controlled during manufacture to have a graduated refractive index that decreases radially from the central axis to the edge.

However, this type of lens is expensive to manufacture. GRIN type fiber optic glass strands are expensive in and of themselves. Cutting and polishing the strands to precise lengths to form fiber optic rod lenses 110, assembling them so that their axes are precisely parallel in the frame 120, and gluing the fiber optic rod lenses 110 are all precision steps for which entire technologies have had to be developed in order to satisfy requirements.

In addition, a major disadvantage of this type of lens is that because of the number of lenses and the difficulty in orienting them, it is not practical to shape the ends of the lenses so that they can magnify the surface that they are imaging. Flat ends are used. In order to increase the imaging resolution, it is necessary to use larger numbers of smaller-diameter rod lenses 110, limiting the maximum resolution and driving up the costs as the desired resolution increases. Furthermore, suppliers for the necessary GRIN fiber optic strands are limited, and thus the base materials themselves are expensive.

Additional, the glass used in the conventional rod lens contains lead which is not environmentally friendly.

JP 56142510 A relates to an optical imaging device halving a first, a second and a third lens array, spaced from each other by shielding members and held together by a housing.

JP 2009-092876 A relates to a compound eye imaging device including an optical lens array, which is disposed between an upper and a lower holding member and arranged on a lens holder including a plurality of holes.

JP 09307697 A describes an optical image transmission element including a plurality of micro lenses arranged in a row supported by a supporting member.

US 4,961,802 A1 and US 2001/0028506 A1 describe lens arrays wherein the lenses are arranged in two rows disposed parallel-to each other and being provided with frames or covers. All the above-mentioned devices have the disadvantage that either the lenses or the construction are difficult to manufacture and thus the costs for the production are high.

Therefore there is a need for an improved lens array for which materials are substantially cheaper and which is simpler to manufacture, and which can have increased resolution without substantially increasing costs.

### SUMMARY OF THE INVENTION

The above-mentioned objects are solved by the lens array assembly according to claim 1. Advantageous improvements of the invention are subject matter of dependent claims.

To achieve these and other advantages and in order to overcome the disadvantages of the conventional method in accordance with the purpose of the invention as embodied and broadly described herein, the present invention provides a lens array where pluralities of lens faces are molded into surfaces of polymer bars, thus simplifying manufacturing, using inexpensive materials, and aligning the lenses without requiring significant manufacturing infrastructure.

The present invention further provides a lens array where the lens faces are configurable at the time of design to support increased resolution.

The lens array of the present invention comprises two identical covers, two identical lens sections, and a middle bolder. Each lens section comprises a plurality of lenses disposed on the top and bottom of the lens section. The lens array is assembled with the middle holder positioned between the two lens sections. The two covers are positioned so that one cover is on the top of the upper lens section and one cover is positioned on the bottom of the lower lens section. The two covers hold the lens array assembly together.

Since each lens section is identical and each cover is identical the same lens section tooling is used for all lens sections and the same cover tooling is used for all covers. As a result, manufacturing cost is reduced and assembly is simplified.

A plurality of first lenses gathers and focuses light reflected from an object so that the light travels in a divergent beam through the first lens section to a second plurality of lens surfaces. The light is generated by an external source. The middle holder blocks and absorbs scattered light, while a plurality of holes allow desired, focused light to reach the third plurality of lens surfaces. The light then transits the second lens section and exits through a fourth plurality of lens surfaces, which focuses the light onto a sensor or sensors.

These and other objectives of the present invention will become obvious to those of ordinary skill in the art after reading the following detailed description of preferred embodiments.

It is to be understood that both the foregoing general description and the following detailed description are exemplary, and are intended to provide further explanation of the invention as claimed.

### BRIEF DESCRIPTION OF THE DRAWINGS

The accompanying drawings are included to provide a further understanding of the invention, and are incorporated in and constitute a part of this specification.

The drawings illustrate embodiments of the invention and, together with the description, serve to explain the principles of the invention. In the drawings:
Figure 1 is a perspective drawing of a prior art rod lens array;
Figure 2 is an exploded perspective drawing of a lens array according to an embodiment of the present invention;
Figure 3 is a cross-sectional view of a lens array according to an embodiment of the present invention;
Figure 4A is a top view of a lens section of a lens array according to an embodiment of the present invention;
Figure 4B is a side view of a lens section of a lens array according to an embodiment of the present invention;
Figure 4C is a bottom view of a lens section of a lens array according to an embodiment of the present invention;
Figure 5A is a top view of a cover of a lens array according to an embodiment of the present invention;
Figure 5B is a side view of a cover of a lens array according to an embodiment of the present invention;
Figure 5C is a bottom view of a cover of a lens array according to an embodiment of the present invention;
Figure 6A is a top view of a middle holder of a lens array according to an embodiment of the present invention;
Figure 6B is a side view of a middle holder of a lens array according to an embodiment of the present invention;
Figure 6C is a bottom view of a middle holder of a lens array according to an embodiment of the present invention;
Figure 7A is a diagram illustrating an assembled lens array according to an embodiment of the present invention;
Figure 7B is a diagram illustrating an exploded view of a lens array according to an embodiment of the present invention;
Figure 8 is a diagram illustrating imaging through lens sections of a lens array according to an embodiment of the present invention;
Figure 9A is a diagram illustrating imaging through lens sections of a lens array with an object in focus according to an embodiment of the present invention;
Figure 9B is a diagram illustrating imaging through lens sections of a lens array with an object 1mm above the focus plane according to an embodiment of the present invention; and
Figure 10 is a graph illustrating through-focus performance of a lens array according to an embodiment of the present invention.

### DESCRIPTION OF THE PREFERRED EMBODIMENTS

Reference will now be made in detail to the preferred embodiments of the present invention, examples of which are illustrated in the accompanying drawings. Wherever possible, the same reference numbers are used in the drawings and the description to refer to the same or like parts.

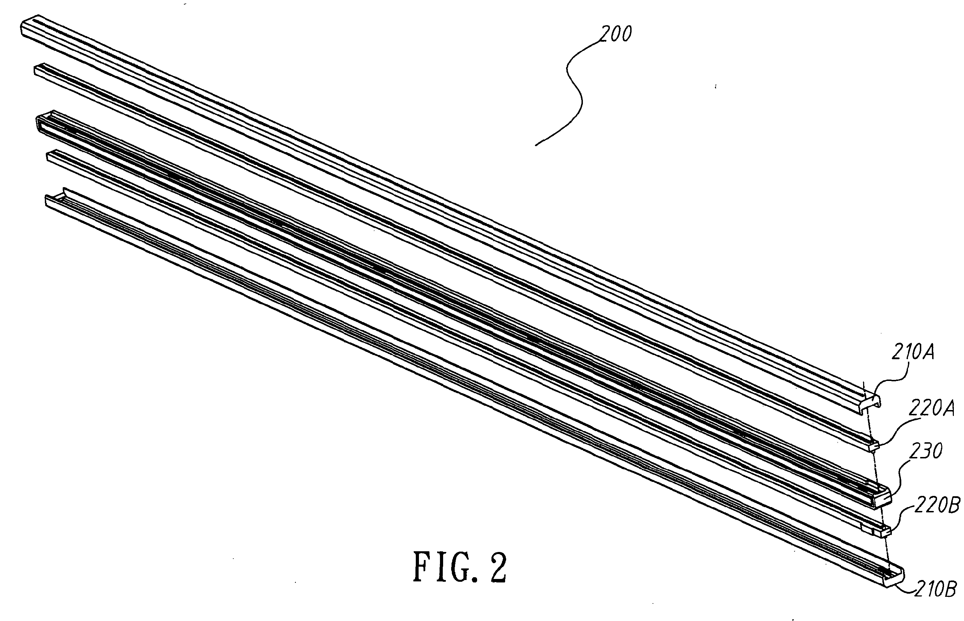

Please refer to Fig. 2, which shows an exploded perspective drawing of a lens array of the present invention. The lens array 200 of this embodiment consists of a first cover 210A, a second cover 210B, a first lens section 220A, a second lens section 220B, and a middle holder 230. Each component is discussed in further detail below. The first cover 210A and the second cover 210B enclose the perimeter of the assembled lens array 200, providing support, mounting, and protection, as well as blocking out external light.

The middle holder 230 and the covers 210A, 210B comprise a plurality of holes organized such that the centers of the holes form a line down the center of the middle holder 230 and the covers 210A, 210B. The holes are spaced apart equally by the inter-axis distance. The holes are circular, oval, cylindrical, or conical.

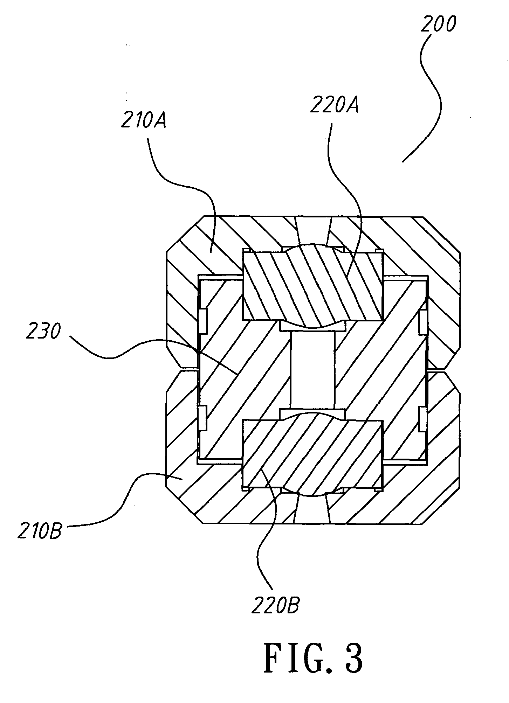

Refer to Figure 3, which is a cross-sectional view of a lens array according to an embodiment of the present invention.

Each lens section 220A, 220B comprises a plurality of lenses disposed on the top and bottom of the lens section 220A, 220B. The lens array 200 is assembled with the middle holder 230 positioned between the two lens sections 220A, 220B. The two covers 210A, 210B are positioned so that one cover 210A is on the top of the upper lens section 220A and one cover 210B is positioned on the bottom of the lower lens section 220B. The two covers 210A, 210B hold the lens array assembly 200 together. Each of the components of the lens array 200 has mating elements that allow the components to attach and be held together. The mating elements also assist during assembly.

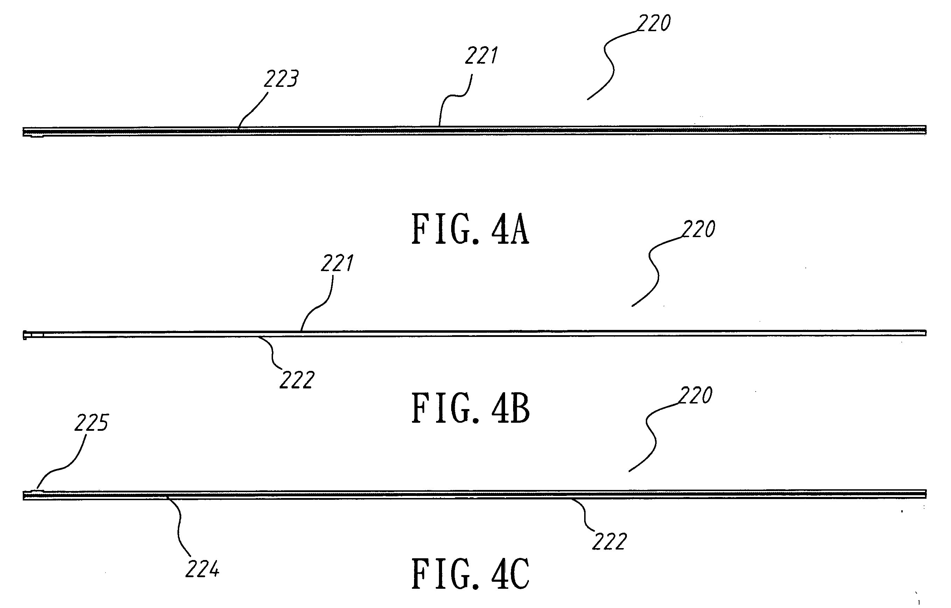

Refer to Figure 4A, which is a top view of a lens section of a lens array according to an embodiment of the present invention, Figure 4B, which is a side view of a lens section of a lens array according to an embodiment of the present invention, and Figure 4C, which is a bottom view of a lens section of a lens array according to an embodiment of the present invention.

The lens section 220 comprises a first surface 221 and a first plurality of lenses 223 are formed with their optical axes in line, spaced apart equally by one inter-axis distance. The line of the centers of the first plurality of lenses 223 in this exemplary embodiment is along the center line of the lens section 220. A surface of the cover fits snugly against the lens first surface 221 so that the plurality of holes of the cover are lined up with their centers on the optical axes of the first plurality of lenses 223.

The second surface 222 of the lens section 220 has a second plurality of lenses 224 formed with their optical axes in line, spaced apart equally by one inter-axis distance. The line of the centers of the first plurality of lenses 223 in this exemplary embodiment is along the center line of the lens section 220. A surface of the cover fits snugly against the second surface 222 so that the plurality of holes in the cover is lined up with their centers on the optical axes of the second plurality of lenses 224.

The lens section 220 further comprises at least one mating element 225 to mate with mating elements of the middle holder to assist in assembly and hold the lens section and the middle holder together.

The lenses of the lens section on both surfaces have identical diameters and optical radii.

The plurality of optical axes of the first plurality of lenses 223 are inline with the plurality of optical axes of the second plurality of lenses 224. Please note that the optical axes of the second plurality of lenses 224 are aligned with the optical axes of the first plurality of lenses 223 and that the number of lenses in the first plurality of lenses 223 is the same as the number of lenses in the second plurality of lenses 224.

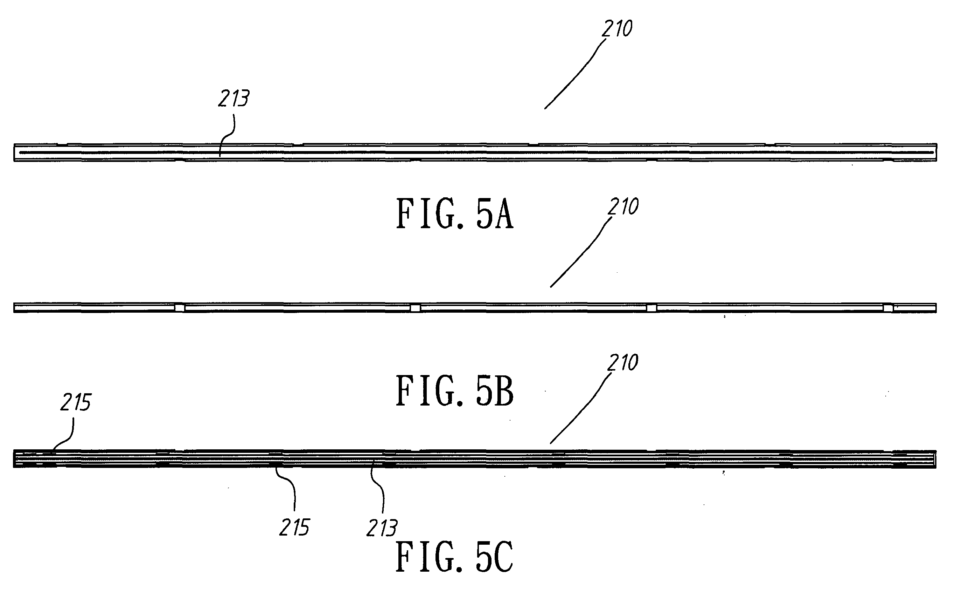

Refer to Figure 5A, which is a top view of a cover of a lens array according to an embodiment of the present invention, Figure 5B, which is a side view of a cover of a lens array according to an embodiment of the present invention, and Figure 5C, which is a bottom view of a cover of a lens array according to an embodiment of the present invention.

The cover 210 comprises a plurality of holes 213 that are sized and spaced according to the size and spacing of the lenses on the lens section. In an embodiment of the present invention the holes 213 are smaller in diameter than the diameter of the lenses.

The cover 210 also comprises a plurality of mating elements 215 that mate with mating elements on the middle holder in order to attach and hold the lens array assembly together. In an embodiment of the present invention the mating elements 215 are male elements, for example posts, tabs, or risers and the mating elements on the middle holder are female elements, for example holes, slots, indentations, or channels. In another embodiment the genders of the mating elements are switched.

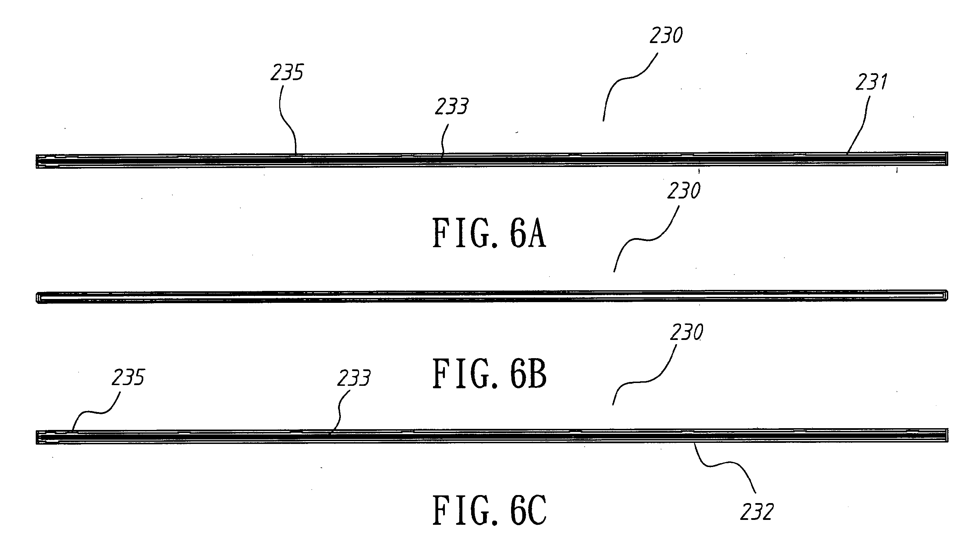

Refer to Figure 6A, which is a top view of a middle holder of a lens array according to an embodiment of the present invention, Figure 6B, which is a side view of a middle holder of a lens array according to an embodiment of the present invention, and Figure 6C, which is a bottom view of a middle holder of a lens array according to an embodiment of the present invention.

The middle holder 230 comprises a plurality of holes 233. The size and spacing of the holes 233 are related to the size and spacing of the lenses of the lens sections. A plurality of mating elements 235 is disposed on the top surface 231 and the bottom surface 232 of the middle holder 230. These mating elements 235 mate with the mating elements of the cover holder in order to attach and hold the lens array assembly together.

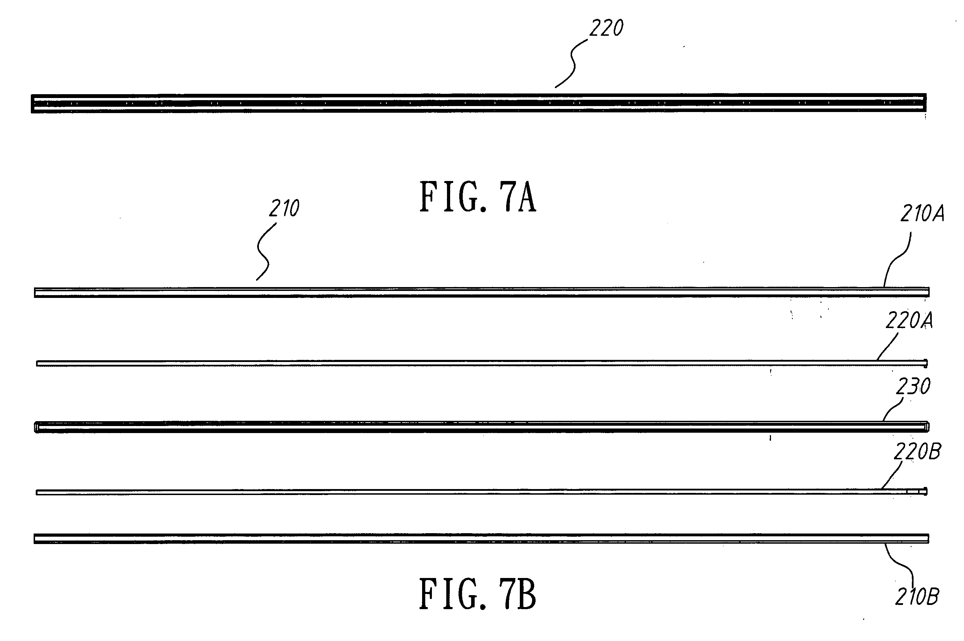

Refer to Figure 7A, which is a diagram illustrating an assembled lens array according to an embodiment of the present invention, and Figure 7B, which is a diagram illustrating an exploded view of a lens array according to an embodiment of the present invention.

The lens array 200 of the present invention comprises a top cover 210A, a bottom cover 210B, a top lens section 220A, a bottom lens section 220B, and a middle holder 230.

To assemble the lens array 200 of the present invention mating elements of the top lens section 220A mate with mating elements of the top surface of the middle holder 230 and mating elements of the bottom lens section 220B mate with mating elements of the bottom surface of the middle holder 230. Additionally, mating elements of the top cover 210A mate with mating elements of the top surface of the middle holder 230 and mating elements of the bottom cover 210B mate with mating elements of the bottom surface of the middle holder 230. The mating elements of the covers, lens sections, and the middle holder cooperate to attach and hold the lens array assembly together.

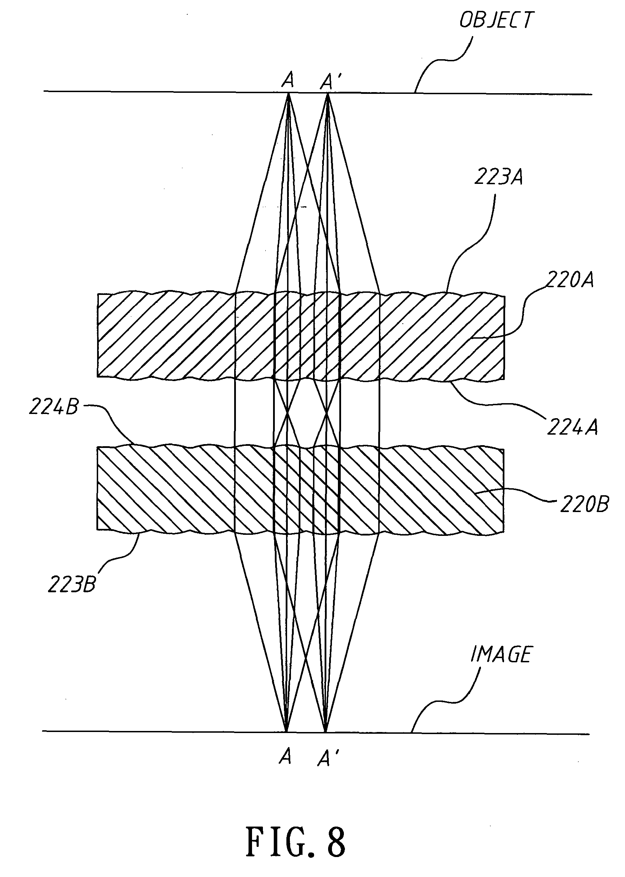

Refer to Figure 8, which is a diagram illustrating imaging through lens sections of a lens array according to an embodiment of the present invention.

In application, an object is positioned at a location that offers proper focus above the lens sections 220 of the lens array. Light illuminates areas of the object. For example purposes these areas are designated A and A'. The light illuminates the object's A and A' and the light enters the top lens section 220A via the lenses 223A. The light travels through the top lens section 220A and exits through the lenses 224A. The light continues through the space between the two lens sections and enters the bottom lens section 220B via lenses 224B. The light travels through the bottom lens section 220B and exits through the lenses 223B. The lenses direct the light so that an image of the object's A and A' is focused and a suitable image of the object is obtained. For example, the light is directed towards an array of sensors which detect and store the image data.

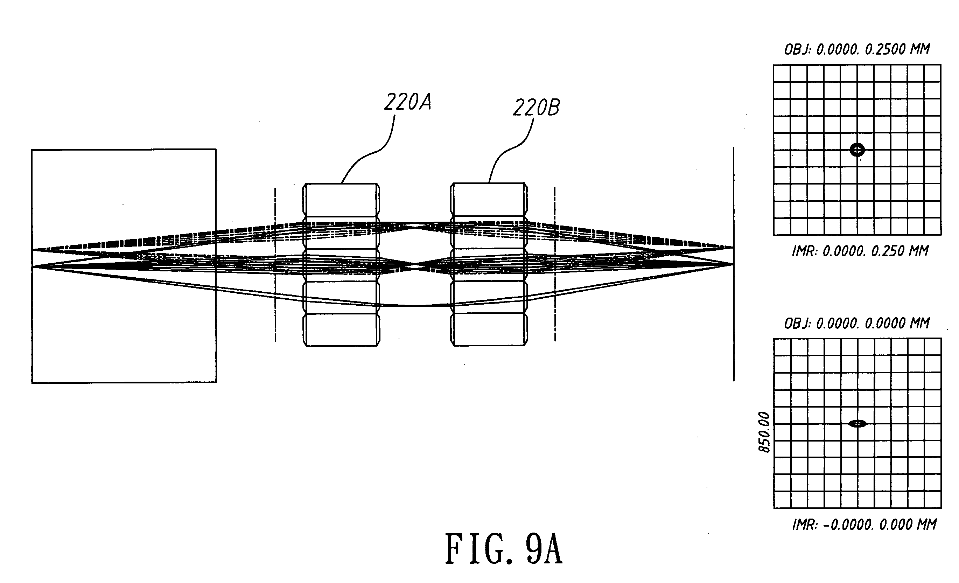

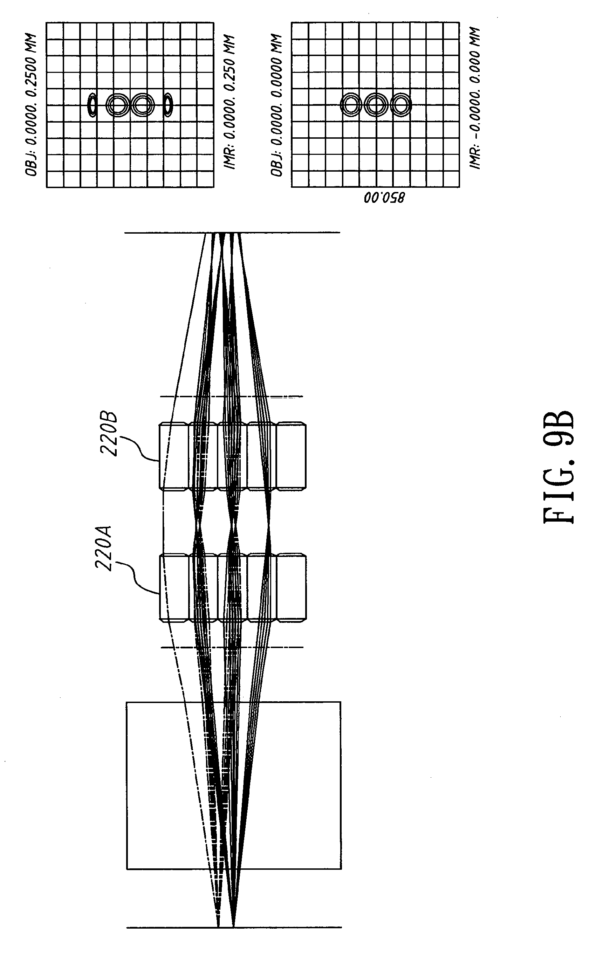

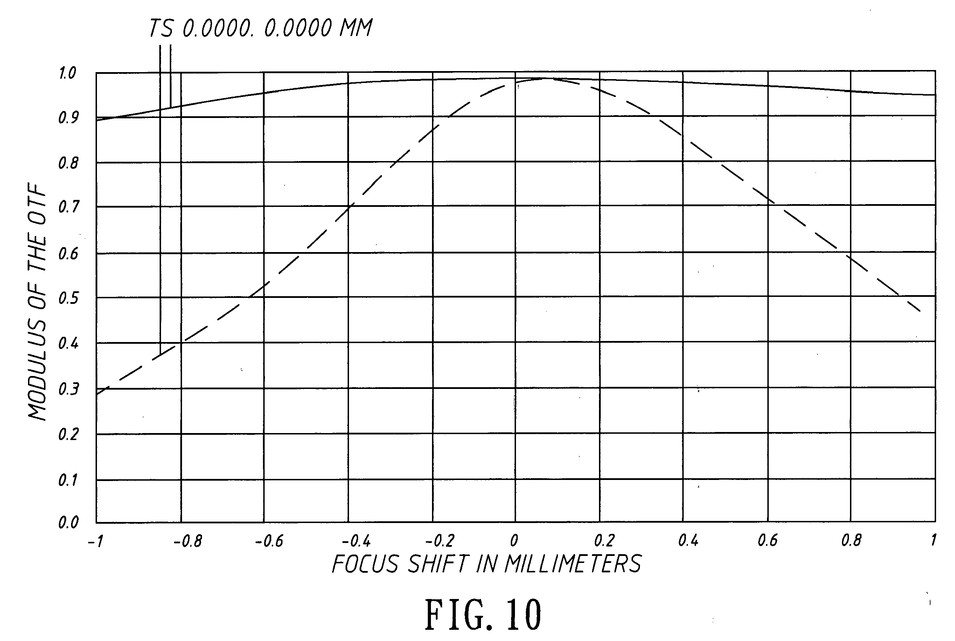

Refer to Figure 9A, which is a diagram illustrating imaging through lens sections of a lens array with an object in focus according to an embodiment of the present invention, Figure 9B, which is a diagram illustrating imaging through lens sections of a lens array with an object 1mm above the focus plane according to an embodiment of the present invention, and Figure 10, which is a graph illustrating through-focus performance of a lens array according to an embodiment of the present invention.

As shown in Figures 9A, 9B, and 10 the lens array of the present invention provides superior performance. Even with the object 1mm out of the ideal focus position an acceptable image is obtainable. The lens array of the present invention provides improved depth of field. Additionally the lens array has enhanced image uniformity and brightness.

In an embodiment, the first lens section and second lens section are made of a refractive, substantially transparent polymer and the cover and middle holder are made of an opaque polymer, for example black, to absorb and/or block undesirable scattered or external light.

When the lens array assembly is used in an image scanner, it is very important that image light does not pass from one lens into another lens that is not perpendicular to it. When this light progresses into an adjacent lens, the resultant image that the sensor captures is a ghost image of the adjacent lens. This is called cross-talk and is undesirable.

An advantage of the present invention is that due to the wall thickness of the middle holder extend to the edges of the individual lenses, cross-talk is prevented.

If the lens array assembly doesn't have a suitable lens housing, light can pass between lenses and result in ghosting. However, in the present invention if light passes from one lens into the hole of the middle holder, the light is absorbed by the wall of the middle holder thus preventing the undesirable light from entering the adjacent lens. As a result, cross-talk is eliminated and ghosting is prevented.

The dots per inch (DPI) resolution of the lens array is adjustable at design time by changing the optical radii, conic constant, or aspherical coefficients of the four lens groups. In contrast with the prior art rod lenses, the lens array can be designed to magnify the surface being imaged.

The lens array thus provides a substantial improvement over the prior art by reducing manufacturing complexity and materials costs. Furthermore, the lens array makes it substantially easier to increase the resolution of a device using the lens array compared to the prior art.

It will be apparent to those skilled in the art that various modifications and variations can be made to the present invention without departing from the scope of the claims. In view of the foregoing, it is intended that the present invention cover modifications and variations of this invention provided they fall
within the scope of the claims.

## Claims

1. A lens array assembly (200) comprising:
a first lens section (220A) comprising a plurality of first lenses (223A) and a plurality of second lenses (224A);
a second lens section (220B) comprising a plurality of third lenses (224B) and a plurality of fourth lenses (223B);
a middle holder (230) positioned between the first lens section (220A) and the second lens section (220B), the middle holder (230) being configured to block and absorb scattered light and comprising a plurality of middle holes (233) encircling the plurality of second lenses (224A) and the plurality of third lenses (224B) for passing desired light from the first lens section (220A) to the second lens section (220B);
wherein the first lens section (220A) and the second lens section (220B) are configured so that light reflected from an object enters the first lens section (220A) through the plurality or first lenses (223A), travels through the first lens section (220)A, exits through the plurality of second lenses (224A), continues through the plurality of middle holes (233), enters the second lens section (220B) through the plurality of third lenses (224B), travels through the second lens section (220B) and exits through the plurality of fourth lenses (223B),
**characterized in that**
a top cover (210A) covering the first lens section (220A), the top cover (210A) comprising a plurality of cover holes (213) over the plurality of first lenses (223A); and
a bottom cover (210B) covering the second lens section (220B), the bottom cover (210B) comprising a plurality of cover holes (213) over the plurality of fourth lenses (223B),
wherein the cover holes (213) of the two covers (210A, 210B) and middle holes (233) of the middle holder (230) are positioned to allow light to enter and exit the first lens section (220A) and the second lens sections (220B), and
the first lens section (220A) and the second lens section (220B) are identically shaped, and
the top cover (210A) and the bottom cover (210B) are identically shaped,
wherein lens faces of the first and second lenses (223A, 224A) of the first lens section (220A) and the lens faces of the third and fourth lenses (223B, 224B) of the second lens section (220B) are molded into surfaces of polymer bars and are configurable at the time of design to support increased resolution, and
wherein the middle holder (230), the top cover (220A), and the bottom cover (210B) further comprise mating elements (235, 215) to hold the lens array assembly (200) together.

2. The lens array assembly (200) of claim 1, wherein the first lens section (220A) and the second lens section (220B) are formed from a transparent polymer.

3. The lens array assembly (200) of claim 1, wherein the top cover (210A), the bottom cover (210B), and the middle holder (230) are formed from an opaque black polymer.

4. The lens array assembly (200) of claim 1, the first lens section (220A) and the second lens section (220B) further comprising mating elements (225) to hold the first lens section (220A) and the second lens section (220B) to the middle holder (230).

5. The lens array assembly (200) of claim 1, the top cover (210A), the bottom cover (210B), the first lens section (220A) and the second lens section (220B) further comprising male mating elements (225) that mate with female mating elements (235) of the middle holder (230) to hold the lens array assembly (200) together.

6. The lens array assembly (200) of claim 1, the top cover (210A), the bottom cover (210B), the first lens section (220A) and the second lens section (220B) further comprising female mating elements that mate with male mating elements of the middle holder (230) to hold the lens array assembly (200) together.

## Patentansprüche

1. Linsenfeldanordnung (200), die umfasst:
einen ersten Linsenabschnitt (220A) mit einer Vielzahl von ersten Linsen (223A) und einer Vielzahl von zweiten Linsen (224A),
einen zweiten Linsenabschnitt (220B) mit einer Vielzahl von dritten Linsen (224B) und einer Vielzahl von vierten Linsen (223B),
einen mittleren Halter (230), der zwischen dem ersten Linsenabschnitt (220A) und dem zweiten Linsenabschnitt (220B) positioniert ist, wobei der mittlere Halter (230) so konfiguriert ist, dass er gestreutes Licht blockiert und absorbiert und eine Vielzahl von mittleren Löchern (233) umfasst, welche die Vielzahl von zweiten Linsen (224A) und die Vielzahl von dritten Linsen (224B) umranden, um erwünschtes Licht von dem ersten Linsenabschnitt (220A) zum zweiten Linsenabschnitt (220B) passieren zu lassen, wobei der ersten Linsenabschnitt (220A) und der zweite Linsenabschnitt (220B) so konfiguriert sind,
dass von einem Objekt reflektiertes Licht in den ersten Linsenabschnitt (220A) durch die Vielzahl erster Linsen (223A) einfällt, durch den ersten Linsenabschnitt (220A) wandert, durch die Vielzahl zweiter Linsen (224A) wieder austritt, seinen Weg durch die Vielzahl mittlerer Löcher (233) fortsetzt, durch die Vielzahl dritter Linsen (224B) in den zweiten Linsenabschnitt (220B) einfällt, durch den zweiten Linsenabschnitt (220B) wandert und durch die Vielzahl vierter Linsen (223B) wieder austritt,
**gekennzeichnet durch**
eine obere Abdeckung (210A), die den ersten Linsenabschnitt (220A) abdeckt, wobei die obere Abdeckung (210A) eine Vielzahl von Abdeckungslöchem (213) oberhalb der Vielzahl von ersten Linsen (223A) umfasst; und
eine untere Abdeckung (210B), die den zweiten Linsenabschnitt (220B) abdeckt, wobei die untere Abdeckung (2108) eine Vielzahl von Abdeckungslöchern (213) oberhalb der Vielzahl von vierten Linsen (223B) umfasst,
wobei die Abdeckungslöcher (213) der beiden Abdeckungen (210A, 210B) und die mittleren Löcher (233) des mittleren Halters (230) so positioniert sind, dass es Licht ermöglicht wird, in den ersten Linsenabschnitt (220A) und in den zweiten Linsenabschnitt (220B) einzufallen und diese wieder zu verlassen, und wobei der erste Linsenabschnitt (220A) und der zweite Linsenabschnitt (220B) identisch ausgebildet sind, und wobei die obere Abdeckung (210A) und die untere Abdeckung (210B) identisch ausgebildet sind,
wobei Linsenflächen der ersten und zweiten Linsen (223A, 224A) des ersten Linsenabschnitts (220A) und Linsenflächen der dritten und vierten Linsen (223B, 224B) des zweiten Linsenabschnitts (220B) in die Oberfläche von Polymerbarren eingegossen sind und während der Konstruktionsphase konfigurierbar sind, um eine erhöhte Auflösung zu unterstützen, und
wobei der mittlere Halter (230), die obere Abdeckung (210A) und die untere Abdeckung (210B) weiterhin Anschlusselemente (235, 215) umfassen, welche die Linsenfeldanordnung (200) zusammen halten.

2. Linsenfeldanordnung (200) gemäß Anspruch 1, wobei der erste Linsenabschnitt (220A) und der zweite Linsenabschnitt (220B) aus einem transparenten Polymer gefertigt sind.

3. Linsenfeldanordnung (200) gemäß Anspruch 1, wobei die obere Abdeckung (210A), die untere Abdeckung (210B) und der mittlere Halter (230) aus einem undurchsichtigen schwarzen Polymer gefertigt sind.

4. Linsenfeldanordnung (200) gemäß Anspruch 1, wobei der erste Linsenabschnitt (220A) und der zweite Linsenabschnitt (220B) weiterhin Anschlusselemente (225) umfassen, um den ersten Linsenabschnitt (220A) und den zweiten Linsenabschnitt (220B) mit dem mittleren Halter (233) zusammenzuhalten.

5. Linsenfeldanordnung (200) gemäß Anspruch 1, wobei die obere Abdeckung (210A), die untere Abdeckung (210B), der erste Linsenabschnitt (220A) und der zweite Linsenabschnitt (220B) weiterhin Steckeransrhlusselemente (225) umfassen, die in Buchsenanschlusselemente (235) des mittleren Halters (230) passen, um die Linsenfeldanordnung zusammenzuhalten.

6. Linsenfeldanordnung (200) gemäß Anspruch 1, wobei die obere Abdeckung (210A), die untere Abdeckung (210B), der erste Linsenabschnitt (220A) und der zweite Linsenabschnitt (220B) weiterhin Buchsenanschlusselemente umfassen, die in Steckeranschlusselemente des mittleren Halters (230) passen, um die Linsenfeldanordnung zusammenzuhalten.

## Revendications

1. Ensemble de lentilles (200) comprenant :
une première section de lentilles (220A) comprenant une pluralité de premières lentilles (223A) et une pluralité de secondes lentilles (224A),
une seconde section de lentilles (220B) comprenant une pluralité de troisièmes lentilles (224B) et une pluralité de quatrièmes lentilles (223B),
un support de milieu (230) positionné entre la première section de lentilles (220A) et la seconde section de lentilles (220B), le support du milieu (230) étant configuré pour bloquer et absorber de la lumière dispersée et comprenant une pluralité de trous du milieu (233) qui encerclent la pluralité de secondes lentilles (224A) et la pluralité de troisièmes lentilles (224B) pour faire passer de la lumière désirée de la première section de lentilles (220A) à la seconde section de lentilles (220B),
dans lequel la première section de lentilles (220A) et la seconde section de lentilles (2208) sont configurées de telle manière que la lumière réfléchie par un objet entre dans la première section de lentilles (220A) par la pluralité de premières lentilles (223A), traverse la première section de lentilles (220A), sort par la pluralité de secondes lentilles (224A), continue à travers la pluralité de trous du milieu (233), entre dans la seconde section de lentilles (220B) par la pluralité de troisièmes lentilles (224B), traverse la seconde section de lentilles (220B) et sort par la pluralité de quatrièmes lentilles (223B),
**caractérisé en ce**
**qu'**un couvercle de dessus (210A) couvre la première section de lentilles (220A), le couvercle de dessus (210A) comprenant une pluralité de trous de couvercle (213) sur la pluralité des premières lentilles (223A) et
un couvercle de fond (210B) couvre la seconde section de lentilles (220B), le couvercle de fond (210B) comprenant une pluralité de trous de couvercle (213) sur la pluralité de quatrièmes lentilles (223B),
dans lequel les trous de couvercle (213) des deux couvercles (210A, 210B) et les trous de milieu (233) du support de milieu (230) sont positionnés pour permettre à la lumière d'entrer et de sortir de la première section de lentilles (220A) et de la seconde section de lentilles (220B) et
la première section de lentilles (220A) et la seconde section de lentilles (220B) ont des formes identiques et
le couvercle de dessus (210A) et le couvercle de fond (210B) ont des formes identiques,
dans lequel les faces de lentille des premières et des secondes lentilles (223A, 224A) de la première section de lentilles (220A) et les faces de lentille des troisièmes et quatrièmes lentilles (223B, 224B) de la seconde section de lentilles (220B) sont moulées dans des surfaces de barres de polyester et sont configurables au moment de la conception pour supporter une résolution accrue et
dans lequel le support de milieu (230), le couvercle de dessus (210A) et le couvercle de fond (210B) comprennent de plus des éléments d'accouplement (235, 215) pour maintenir ensemble l'ensemble de lentilles (200).

2. Ensemble de lentilles (200) selon la revendication 1 dans lequel la première section de lentilles (220A) et la seconde section de lentilles (220B) sont formées en un polymère transparent.

3. Ensemble de lentilles (200) selon la revendication 1 dans lequel le couvercle de dessus (210A), le couvercle de fond (210B) et le support de milieu (230) sont formés en un polymère noir opaque.

4. Ensemble de lentilles (200) selon la revendication 1, la première section de lentilles (220A) et la seconde section de lentilles (220B) comprenant de plus des éléments d'accouplement (225) pour maintenir la première section de lentilles (220A) et la seconde section de lentilles (2208) sur le support de milieu (230).

5. Ensemble de lentilles (200) selon la revendication 1, le couvercle de dessus (210A), le couvercle de fond (210B), la première section de lentilles (220A) et la seconde section de lentilles (220B) comprenant de plus des éléments d'accouplement mâles (225) qui s'accouplent avec des éléments d'accouplement femelles (235) du support de milieu (230) pour maintenir ensemble l'ensemble de lentilles (200).

6. Ensemble de lentilles (200) selon la revendication 1, le couvercle de dessus (210A), le couvercle de fond (210B), la première section de lentilles (220A) et la seconde section de lentilles (220B) comprenant de plus des éléments d'accouplement femelles qui s'accouplent avec des éléments d'accouplement mâles du support de milieu (230) pour maintenir ensemble l'ensemble de lentilles (200).
